# EUROPEAN PATENT APPLICATION

(11) **EP 2 573 724 A1**
(43) Date of publication of application: **27.03.2013**
(21) Application number: 12186139.7
(22) Date of filing: 26.09.2012
(51) Int. Cl.: G06Q 30/00

(54) **Product registration and tracking system**

(30) Priority: 26.09.2011 US 201161539340 P
(71) Applicant: Accenture Global Services Limited, Dublin 4 (IE)
(72) Inventor: Dempski, Kelly L., Redwood City, CA 94062-3411 (US)
(74) Representative: Penny, Daryl

(57) **Abstract**

A server for registration of products may include a processor and computer storage. The processor may be configured to receive, via a network, a communication from a product application executed on a computing device, the communication including a product identification (ID) associated with a product and an indication of registration of the product by a user of the product application. The processor may further be configured to register the product at least by storing, in the computer storage, the product ID and a relationship between the product and an identification of the user of the product application. The processor may further be configured to send a subsequent communication to the product application on the computing device based on the registration of the product.

## Description

### BACKGROUND

The present disclosure relates generally to a system and method for registering consumer products, and more particularly to a system and method for registering consumer products and collecting and tracking usage of the products to provide personalized, informative customer service, notifications, and alerts to product owners.

The registration process for consumer products is rudimentary at best. Typically, after a consumer purchase of a product, the consumer registers the purchase by filling out a registration card included in the product's materials. The registration card is then mailed to the manufacturer for manual entry of the registration information into the manufacturer's computer system. At times, this process may be streamlined by enabling the consumer to fill out the registration online, with certain required fields. These methods tend to take a number of steps or extra work by a new owner who views them as optional and bothersome. Worse than bothersome, the consumer may view the registration process as yet another way for a manufacturer to obtain personal information and interests for purposes of further marketing to the consumer, without any real benefit to the consumer. Accordingly, known registration methods have proven to be inadequate to capture accurate or complete information about the product owners.

### BRIEF SUMMARY

The present disclosure generally relates to registering consumer products and collecting and tracking usage of the products to provide personalized, informative customer service, notifications and alerts to product owners. The embodiments disclosed herein describe a system through which consumers receive benefits based on registration of a product while perhaps remaining anonymous in personal identity. Accordingly, consumers' perception of anonymity may promote registration of their products.

In one embodiment, a server for registration of products includes a product registrar, a processor, and computer storage. The product registrar may be executable by the processor to receive, via a network, a communication from a product application executed on a computing device for registration of a product, the communication including a product identification (ID) associated with a product and an indication of registration of the product by a user of the product application. The processor may register the product by storing, in the computer storage, the product ID in relation to an identification of the user of the product application. The processor may send a subsequent communication to the product application on the computing device based on the registration of the product. The identification of the user may come from a username and/or password submitted by the user for access to the product application, such as through an authentication process.

The product ID may include a unique identifier of a specific product. The processor may receive the unique identifier of the product from the product application, receive the same unique identifier of the product from a specific product, and may correlate, using the unique identifier, the user of the product application with the specific product in order to allow communication between the specific product and the product application executed on the computing device. The registration may further occur where the processor receives a unique identifier of the user or of the mobile device of the user and stores in computer storage a relationship between the unique user identifier and the product ID of the product being registered by the user. The unique user identifier may also come from the product application or from the mobile device of the user.

Alternatively, or in addition to, the processor may receive a command communication from the mobile device, the command communication including the unique identifier and a command action indicative of an action for the registered product to perform. The processor may route the command communication to the registered product using the correlation of the user with the registered product.

In another embodiment, a mobile device for registration of a product includes a transmitter, a receiver, a storage, a scanner, and a processor coupled with the transceiver, the storage, and the scanner. The processor may be configured to access a product application for registration of a product. The processor may direct the scanner through the product application to detect a product identification (ID) sequence on a registration card associated with the product. The processor may direct the transmitter to send the product ID sequence to a server over a network to register the product. The processor may receive a communication through the receiver with reference to the product from the product or from the server over the network.

In additional embodiments, the processor may receive, through the receiver, a connection from the product over the network. The processor may receive an input from the user through a control interface of the product application and generate a command based on the input, the command to control at least one feature of the product. The processor may send the command over the network to the product via the server, thus remotely controlling the product from the mobile device. Alternatively, or in addition, the mobile device may include a wireless connector through which to provide a wireless connection directly with the product. The command may be sent directly over the wireless connection to the product to remotely control the at least one feature of the product.

Other systems, methods, and features will be, or will become, apparent to one with skill in the art upon examination of the following figures and detailed description. It is intended that all such additional systems, methods, features and be included within this description, be within the scope of the disclosure, and be protected by the following claims.

### BRIEF DESCRIPTION OF THE DRAWINGS

Figure 1 is a block diagram of an exemplary system for product registration and tracking.
Figure 2 is a block diagram of the manufacturer server and the analytics server of the system of Figure 1.
Figure 3A is a block diagram of an exemplary computing device on which the mobile applications of the system of Figure 1 may be executed.
Figure 3B is a screen shot of an example mobile device on which alerts may be received on a mobile application of a registered product.
Figure 4 is a flow diagram of an exemplary method for product registration with a manufacturer server.
Figure 5 is a flow diagram of an exemplary method for a manufacturer server to register and track a product.
Figure 6 is a flow diagram of an exemplary method for remote control of a smart product by a product application on a computing device after registration of the product.
Figure 7 is a flow diagram of an exemplary method for tracking usage data and information of a product for analysis purposes and sending notices, alerts, and/or recommendations to a product application a computing device of a user based on the analysis.
Figure 8 is a flow diagram of an exemplary method for linking an application on a computing device, after association with a product, with Facebook^{®} or other social media site for gathering personal data and enhancing product and discount experience of a product owner.
Figure 9 is a general computer system, programmable to be a specific computer system, which may represent any of the computing devices referenced herein.

### DETAILED DESCRIPTION

By way of overview, the example embodiments described below relate to a system for registering a consumer product. The owner (also referred to as user) of the product may register the product using a product application executed on a computing device (such as a computer, a mobile device or other type of electronic communication device) that communicates with a networked server such as a server having an Internet connection. After registration, the product application may receive a subsequent communication from the server via the computing device with relation to the product, such as an update, recall notice or the like.

The product may include a registration card (or other registration material). The product application may use the computing device to scan part or all of the registration card, such as a product ID from the registration card, thereby generating scanned data. The computing device may then transmit the scanned data to a manufacturer server over a network. The product ID may be a serial number or the like that uniquely identifies the product. The manufacturer server, in response to receiving the product ID, may identify a type of product (such as identify a particular manufacturer/model) and may send a product application to the computing device for installation and use on the computing device (discussed below).

The product, which may be also connected to the network, may send a communication, which includes the product ID, to the manufacturer server. The manufacturer server may then correlate the product ID received from the mobile device with the product ID received from the product, and complete a communicative connection between the product and the product application. The product may also be registered despite not being connected to the network by storing a correlation or an association of the product type with the product ID and optionally also with an ID of the user performing the registration. Such a product in this case may include non-electronic products or legacy devices void of network or wireless connectivity.

Registration information may be used to send updated information to the user or owner in an email or regular mail, such as a recall notice, for instance. Registration may also be used for marketing purposes, such as to attempt to sell the consumer a related good or service or a replacement product once the warranty has expired. These types of notices and offers often go unheeded as spam mail. In general, information that is obtained from owners is for the benefit of the product manufacturer, not the owners who have purchased those products. The system and method disclosed may improve the registration process, the notification process, and/or the marketing process.

Once registration is complete, the manufacturer server may track usage of the product over the network, perform analysis based on usage data, and send updates, recall notices, recommendations and the like to the application on the computing device. The manufacturer server may also provide a customer service interface through an interface of the product application, to include chat, email, voice calls, links to manuals, usage tips, alerts and associated product offers. In the instance where the product is a smart device (such as a smart appliance), the computing device may execute the product application (previously received by the manufacturer server) to remotely control one or more features of the product over the network or directly via a wireless connection. In this way, the computing device may become a secondary interface to the product for operation and monitoring. The computing device may be a mobile device such as a smart phone, tablet or other mobile computer.

Other embodiments are envisioned as explained herein. The user may obtain these features through the product application without a need to send personal identification information to the product manufacturer. Many different consumer products may be registered as disclosed herein, including but not limited to a washing machine, a dryer, a dishwasher, a hot water heater, a refrigerator, a water filter, a furnace, a freezer, and any other residential or commercial appliance or device capable of being adapted for network connection and external tracking.

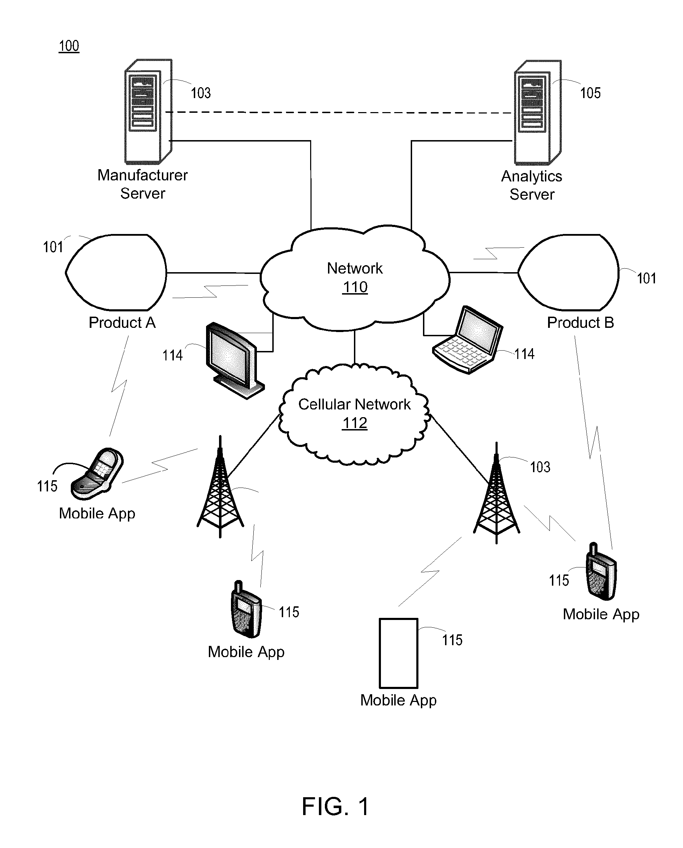

Figure 1 is a block diagram of an exemplary system 100 for product registration and tracking. The system may include a plurality of consumer products 101 that are purchased by owners, also referred to as users herein. The products 101 may be coupled with a manufacturer server 103 and optionally with an analytics server 105 over a network 110. Herein, the phrase "coupled with" is defined to mean directly connected to or indirectly connected through one or more intermediate components, including a network. The manufacturer server 103 and the analytics server 105 may be integrated as one machine as indicated by the dashed line connecting the two, or may be coupled together, at least by way of the network 110. In one embodiment, a third party may perform the function of the analytics server and transmit data to the manufacturer server 103 for use in providing services and product offers and the like to the owner, which will be discussed in more detail. The network 110 may be wired, wireless, or a combination of wired and wireless connections, may include one or more of the Internet, an intranet, a wide area network (WAN), and one or more local area networks (LAN). The network 110 may be coupled with a cellular network 112 through any number of switches or network components.

The cellular network 112 may be a global system for mobile communications (GSM) operating in any of the latest standards, including in third generation (3G) or fourth generation (4G) modes, and/or in any Mobile WiMax standard. Although not shown, the cellular network 112 may further be coupled with or include a public switched data network (PSDN) and a public switched telephone network (PSTN). As new cellular technology is constantly being developed, aspects of the present disclosure do not rely on any single cellular standard.

The system 100 may further include any number of computing devices 114 running Web applications or smart phone applications and the like. The computing devices 114 may further include a plurality of mobile devices 115 for running such applications. For simplicity, computing devices 114, when are referred to herein, may include mobile devices but may also include stationary devices, to include the products 101 themselves. For instance, the products may be considered smart appliances or smart products and capable of independently registering themselves and receiving upgrades, updates, and other communications that users may view and take action regarding through an interface or display of the smart appliances or devices.

The mobile devices 115 may connect to the cellular network 112 through a plurality of base stations 118. The GSM network 215 includes support nodes, servers, and gateways operable to transmit the data carried within the GSM network 112 and between the mobile devices 115 and the PSDN and/or the PSTN. The mobile devices 115 may be configured to run on an Apple^{®} platform or an Android^{®} platform or any other cell phone platform in existence or to be developed. The mobile devices 115 may include smart phones, tablets like the iPad^{®}, personal digital devices (PDAs), laptops, or any other mobile computing device capable of executing an application for communication with the manufacturer server 103.

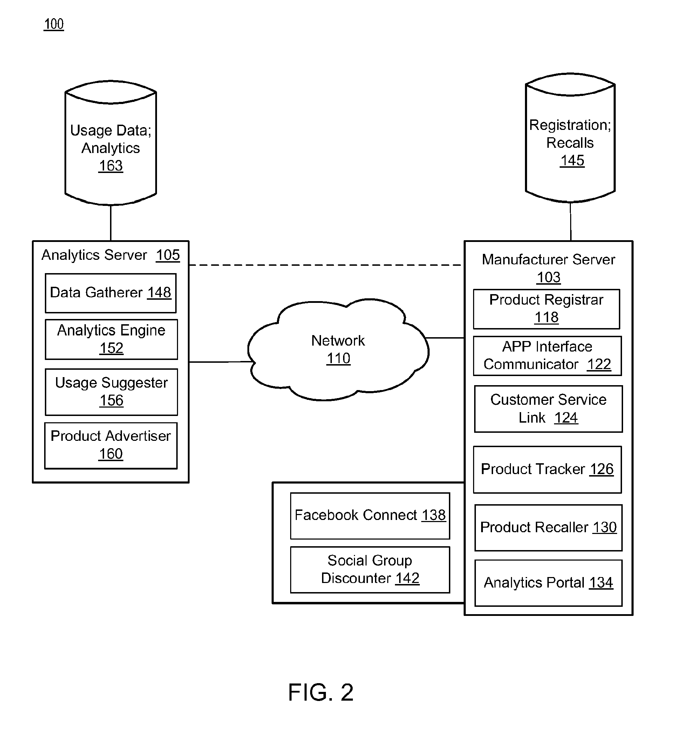

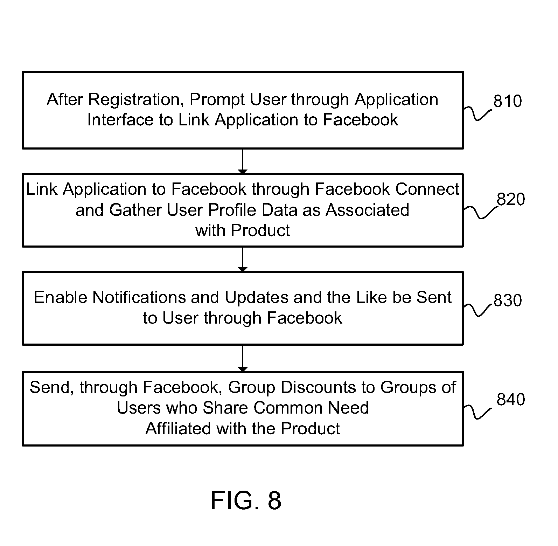

Figure 2 is a block diagram of the manufacturer server 103 and the analytics server 105 of the system 100 of Figure 1. The manufacturer server 103 may further include, but is not limited to, a product registrar 118, an application interface communicator 122, a customer service link 124, a product tracker 126, a product recaller 130, an analytics portal 134, a Facebook connect module 138, and a social group discounter 142. The Facebook connect module 138 and the social group discounter 142 are discussed in more detail with reference to Figure 8. The manufacturer server 103 may further include or be coupled with data storage including a registration and recalls database 145.

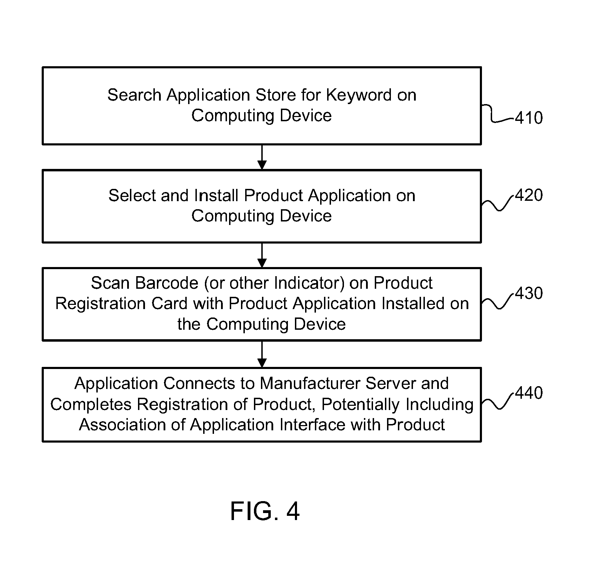

The analytics server 105 may include, but is not limited to, a data gatherer 148, an analytics engine 152, a usage suggester 156, and a product advertiser 160. The analytics server 105 may further include or be coupled with a data storage including a usage data and analytics database 163. These components of the manufacturer server 103 and the analytics server 105 may be software, hardware, or a combination of hardware and software. The execution of these components is covered in more detail with reference to Figures 4-9.

The product registrar 118 may receive a connection initiation from the computing or mobile devices 114 or 115 that have downloaded and installed a product registration application (or simply "product application"). As is common with mobile phone or computing device applications, the user may create a username and password upon installation in order to authenticate the user for use of the product application and to communicate with the server 103. Alternatively, or in addition, the product application may create a user identification (ID) (or other identifier) specific to the user and/or specific to the computing device of the user by which to track future communication or transactions with the product application of the user.

The computing device 114, using the product registration application, may scan the registration card of the product 101 to obtain the product code or ID such as a quick response (QR) code. The product registrar 118 may receive and store in memory (e.g., in the registration and tracking database 145) the product code sent from the computing device 114. The product code may indicate one or more features of the product 101, such as the make and/or model of the product 101. The product code may additionally or alternatively include a serial (or other) identification (ID) number that uniquely identifies the specific product 101. Although number is referred to, "number" is understood to include a computer-readable sequence of characters and/or symbols.

The product registrar 118 may register the product application at least by storing in computer storage the product ID in relation to an identification of the user with the product application. The identification of the user may include a user identifier that is unique to the user or to the computing device of the user. The relationship between the product ID and the unique user identifier may be stored in the computer storage during registration. The manufacturer server 103 may then send a subsequent communication to the product application on the computing device based on the registration of the product. Communication with the applications installed on the computing devices 114 may be executed with an application interface communicator 122.

The product registrar 118 may also receive an identification (ID) number from the product 101 after the owner connects the product to the network 110. The product 101 may be wired for communication or may communicate wirelessly. In response to receiving the ID from the product 101, the product registrar 118 may communicate with the computing device 114 with reference to the product 101. The product registrar 118 may further correlate the ID number previously stored in memory with the ID number received from the computing device to use the registration of the product to connect-or cause inter-communication between-the product and the product application on the computing device.

Once the registration server 103 connects the product to the product application on the computing device, communications may be sent to the product, to the product application, and between the product and product application on the computing device. As one example, the product information may be provided directly to the product application via the computing (or mobile) device 114 or 115 over the network 110 and 112 from the product 101, which may include product-specific information or usage data. In another example, general product information (such as related to recalls) may be sent from the manufacturer server 103 to the product application via the computing device 114 or directly to the product. As a further example, the product application on the computing device may send and receive communications via the manufacturer server 103 to and from the product 101, with the manufacturer server 103 acting as an intermediary. The manufacturer server 103 may also process or format usage data from the product for user-friendly display on the computing device 114.

The customer service link 124 may communicate with the product application on the computing device 114 to enable the user to link to a variety of services or information sources through chat, email, a voice call, or through a link to a user manual or a product demonstration. The customer service link 124 may also provide usage tips or alerts based on analysis of tracked usage information or maintenance information received from the product 101. Accordingly, the service provided by the manufacturer may be proactive, personalized, and welcomed by the user as up to date and relevant to the specific model of the product 101 and based on its condition and age. The product tracker 126 may track the product 101 if network connected, such as when it is used during the day and/or week, how long it has been operated, information from maintenance sensors about a potential fault or failure, and other types of such information. The manufacturer server 103 may receive the analysis of this tracked information from the analytics server 105 through the analytics portal 134 if the analytics server 105 is separate from the manufacturer server 103, or may perform the analysis itself if the two servers 103 and 105 are integrated.

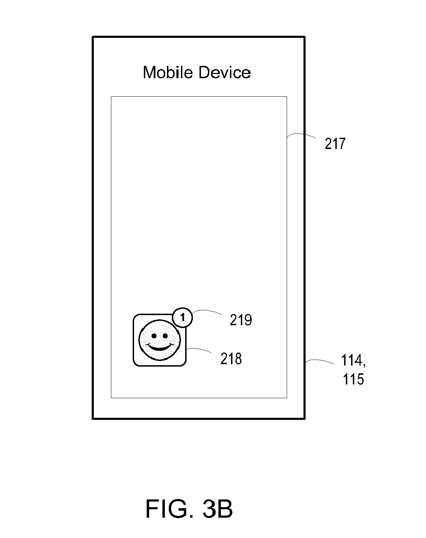

When the manufacturer issues a product recall, the manufacturer may store the recall information in memory and associate the product codes and/or the product ID numbers affected by such a recall with a recall notice. Any time after a product has been registered by the product registrar 118, the product recaller 130 may identify a product code or identification number associated with a product recall. The product recaller 130 may, in such a case, send a notification through the application interface communicator 122 to the product application on the computing device 114 (Figure 3B) to inform the owner that the product is under recall and provide instructions or a link to instructions on the manufacturer server for repairing or replacing the product. Indeed, the product recall may be related to just a part of the product 101, and thus a serviceman may be able to come to the location of the product to execute the product recall.

The data gatherer 148 of the analytics server 105 may gather usage data similar to what the product tracker 126 performs, and the two may be one in the same. The data gatherer 148 may initiate data retrieval to pull information from the product 101 on a periodic basis if the data gatherer 148 does not receive such data often enough from the product 101. The analytics engine 152 may be configured to analyze the usage data and potentially other information provided over the network 110 by the product 101. The analysis may include compiling a usage history and generating a recommendation for the user that the user run the product 101 at night, or during off-peak hours for more efficient power usage. As one example, a user may always operate a dishwasher on the heavy dirt cycle regardless of the type of dish load. The analytics engine may determine based on frequency of use that more than likely, the heavy dirt cycle is unnecessary for every cycle and suggest to the user a more efficient way to utilize the dishwasher.

The usage suggester 156 may make the recommendation to the user by way of the product application on the computing device 114 to adjust usage of the product 101. The recommendation may be made to the user directly through the application interface communicator 122 or through the customer service link 124. The usage suggester 156 may further send a predictive alert or other alerts to the product application for the user to consider taking action according to the alert. For instance, after the product 101 has been used for a predetermined period of time, the usage suggester 156 may send an alert according to a maintenance schedule that the product 101 should be serviced. Another predictive alert may be a suggestion to replace the product at the end of its useful, efficient life.

The product advertiser 160 may provide offers to the user through the product application that are related to the product 101 or for products similar to the product 101. For instance, the product advertiser 160 may determine that those with a certain type of washing machine should receive an offer for a detergent that helps the washing machine work more efficiently and last longer. The product advertiser 160 may send the offer through the application interface communicator 122 to the product application on the computing device 114.

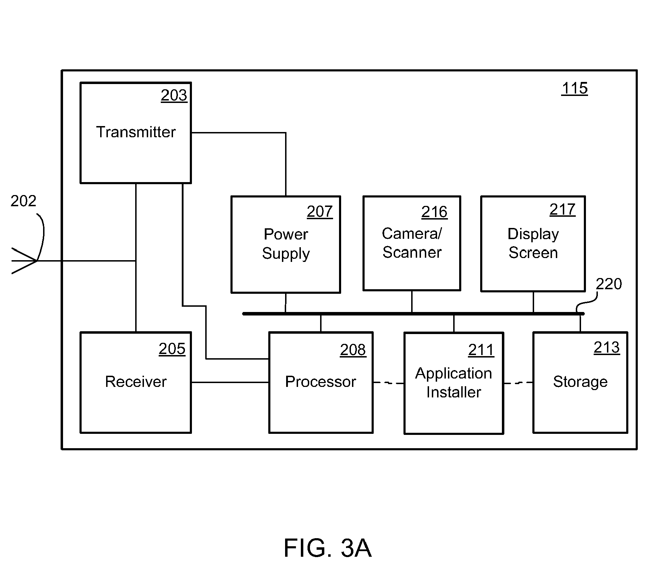

Figure 3A is a block diagram of an exemplary mobile device 115 on which the mobile applications of the system of Figure 1 may be executed. Figure 3A may also display at least some components and functions of a more generic computing device 114. The mobile device 115 includes an antenna 202, a transmitter 203, a receiver 205, a power supply 207, a processor 208, an application installer 211, a storage 213 or other memory, a camera/scanner 216, and a display screen 217. In one exemplary embodiment, the antenna 202 may be coupled with both the transmitter 203 and to the receiver 205, or the transmitter 203 and the receiver 205 may be connected to respective antenna units. The transmitter 203 and the receiver 205 may be combined in a single transceiver.

In one embodiment, the processor 208, the storage 213, the power supply module 207, the application installer 211, the camera/scanner 216, and the display screen 217 are coupled with each other through a communications bus 220. The communications bus 220 is operable to transmit control and communications signals from and between the components connected to the bus 220, such as power regulation, memory access instructions, and other system information. The processor 208 is coupled with the receiver 205, and the transmitter 203 is coupled with the receiver 205 and to the processor 208. One of skill in the art will appreciate that additional elements may be included in the mobile device.

After a user installs the product application with the application installer 211, the product application may use the scanner 216 feature (which may use camera hardware and/or software) to detect the product ID and/or serial number on the registration card that comes with the product 101. The product ID and/or serial number may then be communicated by the antenna 202 to the base station 103, which connects to the cellular network 112. The cellular network 112 communicates the product ID and/or serial number further through the network 110 to the manufacturer server 103. The networked communication of the ID number may be encrypted. Once the product ID and/or serial number from the mobile (or computing) device 115 is correlated by the manufacturer server with that of the product 101 as associated with the product application of the user, the product 101 and the product application executed on the computing (or mobile) device 114 may then communicate with each other over the network 110 (or even via a local wireless connection, which is discussed below). The communication between the product and the computing device may also be encrypted. In one embodiment, when the product 101 is considered "smart," the display screen 217 of the mobile (or computing) device 115 may then function as a control interface for the product. The communication between the product 101 and the product application on the mobile device 115 and/or between the mobile device 115 and the manufacturer server 103 may be substantially continuous.

When the display screen 217 functions as a control interface for the product 101, at least a portion of the installed product application on the computing device 114 may be converted into a serial of control buttons or indicators that virtually control the product. These virtual controls may correlate more or less directly to actual controls on the user interface of the product 101 or at least affect control a feature of the product related to an actual control on the user interface. Correlations of such controls between the control interface of the display screen 217 and the control interface of the product 101 may be stored in the storage 213 of the mobile or computing device and optionally also in the registration database 145 of the manufacturer server 103. When the display screen 217 of a mobile or computing device acts as a virtual control of the product, the display screen 217 may be considered a secondary interface for operation and monitoring of the product.

Figure 3B is a screen shot of an example mobile device 115 on which alerts may be received on a mobile application of a registered product. Of course, alerts may be received on any computing device 114 and through any method such as email, text, voice message, audio alert, and the like. An icon 218 on the display screen 217 of the mobile device 115 may be selectable to launch the product application, once installed. An indicia 219 superimposed or integrated with the icon 218 may, in a non-obtrusive manner, indicate to the user that an update (such as a product recall) or other relevant information on the product is available. Once the application is launched, the product manufacturer server 103 may provide the update or other information to the user through the application 218, with instructions that the user may take with regard to the product.

The other information may include valuable offers or discounts on products related to the registered product. As an example, a special type of detergent for use on a certain model washing machine is related to the original purchase of the washing machine. The offers or alerts sent to the computing or mobile device 114 or 115 of a user may be based on products owned by the user or based on usage patterns of that user. For instance, based on an amount of use and age of an appliance, the analytics server 105 may send an alert to a user that the user should contact a local provider or store for maintenance of the appliance. Furthermore, based on content watched on a television, the analytics server 105 may send various offers or advertisements to target interests of the user.

Figure 4 is a flow diagram of an exemplary method for product registration with the manufacturer server 103. At block 410, a new product owner (user) may search on a computing or mobile device 114 or 115 for a keyword or phrase that the registration card may suggest. Additionally or alternatively, the registration card may have a link that may be scanned by or typed into the computing device 114 that leads to a download option. At block 420, the owner may select and install the product application upon locating the product application after the search. The computing device 114 may install the application from a mobile application store (such as through the App Store on the iPhone) or directly from the manufacturer server 103. At block 430, the owner may scan the barcode (or other indicator) on the product registration card with the installed application on the computing or mobile device. As discussed, the barcode may have encoded thereon a product identification (ID) and/or a serial (or other identification) number. At block 440, the application on the mobile device connects to the manufacturer server 103 and completes registration of the product 101, which may include association of the application interface of the application installed on the computing device 114 with the product 101.

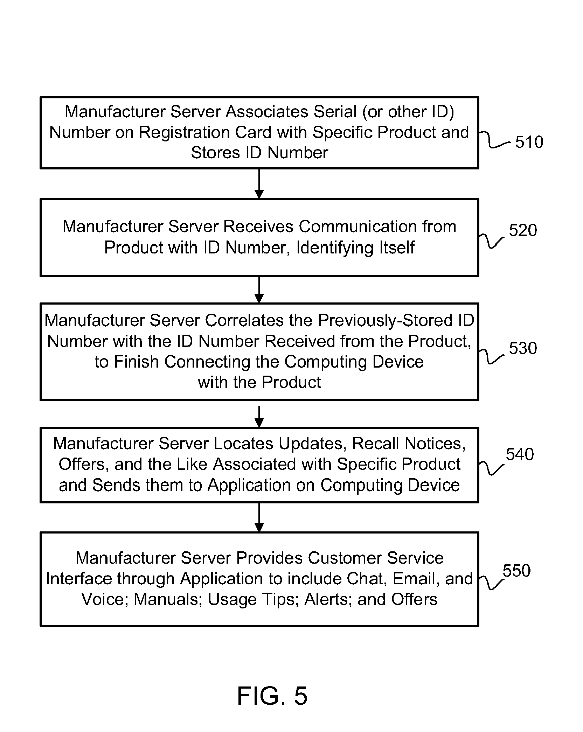

Figure 5 is a flow diagram of an exemplary method for a manufacturer server 103 to register and track the product 101. At block 510, the manufacturer server 103 associates the serial (or other ID) number on the registration card with a specific product 101 and stores the ID number in memory. The association may be made by comparing the ID number with a database (or lookup table) of ID numbers saved in memory in relation to specific products manufactured by the manufacturer that owns the manufacturer server 103.

At block 520, the manufacturer server 103 receives a communication from the product 101 with the serial or other ID number, identifying itself to the server 103. Alternatively, the product 101 may send the communication (with the serial or other ID number identifying itself to the server 103) prior to the manufacturer server receiving the serial number on the registration card.

At block 530, the manufacturer server 103 correlates the previously-stored ID number with the ID number received from the product, to complete the connection between the computing device and the product 101. In one example, the connection between the computing device 114 and the product 101 may include updating a table that correlates a mobile device 115 with the product 101. In another example, the connection between the product application on the computing device and the product 101 may include updating a table that correlates an identification of the user with the product registered by the user. At block 540, the manufacturer server locates updates, recall notices, product offers and the like associated with the specific product 101 stored in memory, and sends them to the installed product application on the computing device. At block 550, the manufacturer server 103 provides a customer service interface through the application to include chat, email, and voice, access to manuals, usage tips, alerts, and other offers. Other services and benefits may be sent to incentivize the owners or users of the consumer products to register their products via the computing device.

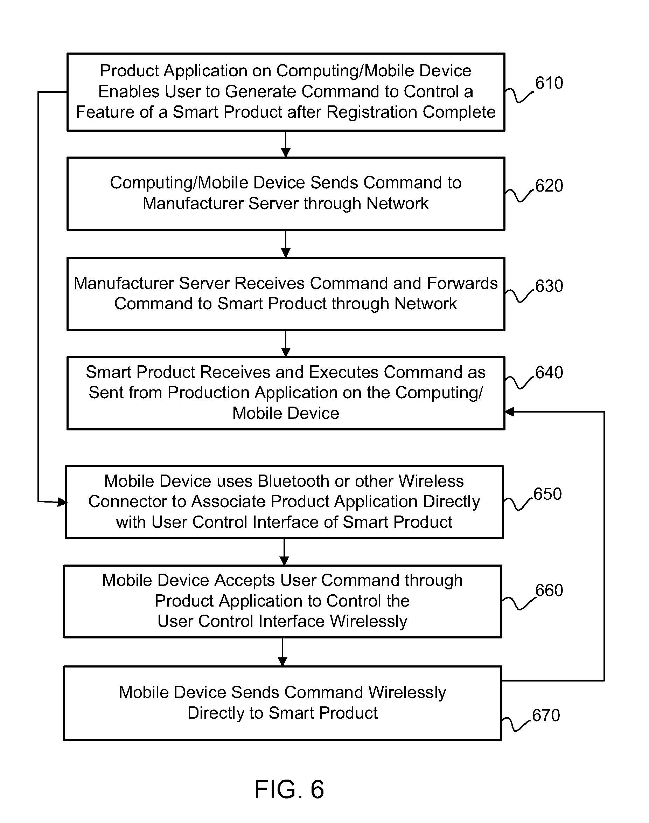

Figure 6 is a flow diagram of an exemplary method for remote control of a smart product by a product application on a computing (or mobile) device after registration of the product. At block 610, the product application on the computing device 114 enables the user to generate a command to control a feature of the smart product 101 after the registration process is complete. At block 620, the computing device sends the command to the manufacturer server 103 through the network 110. At block 630, the manufacturer server 103 receives the command, determines identification of the user on the application and/or an identification of the computing device, determines a smart product 101 correlated with the user and/or computing device 114 (such as by using a look-up table), and forwards the command to the determined smart product 101 through the network 110. At block 640, the smart product 101 receives and executes the command as sent from the product application on the computing device, thus affecting the control and/or operation of the product 101.

In an alternative embodiment, at block 650, the mobile device 115 may use a Bluetooth^{®} or other wireless connector to connect through the antenna 202, the transmitter 203, and the receiver 205, to associate the product application directly with the user control interface of the smart product 101. The other wireless connector may be a Wi-Fi^{®}, Zigbee^{®}, or some other wireless standard connector. The user control interface of the smart product 101 may be adapted with similar technology integrated with the control of the smart product 101. At block 660, the mobile device 115 accepts the user command through the product application to control the user control interface of the product 101 wirelessly. At block 670, the mobile device 115 sends the command wirelessly through the transmitter 203 and antenna 202 to the smart product 101. At block 640, the smart product 101 receives and executes the command as sent from the mobile device 115, thus affecting the control and/or operation of the product 101.

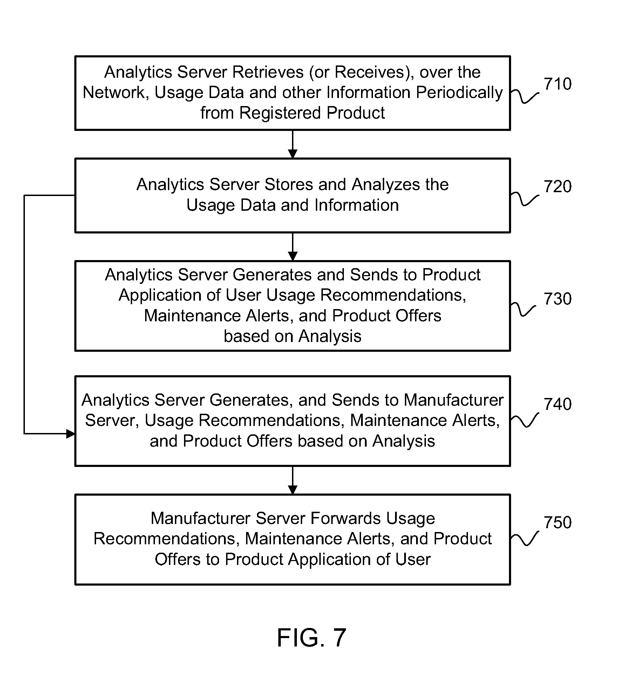

Figure 7 is a flow diagram of an exemplary method for tracking usage data and information of a product for analysis purposes and sending notices, alerts, and/or recommendations to a product application on a computing (or mobile) device of a user based on the analysis. At block 710, the analytics server 105 retrieves (or receives), over the network 110, usage data and other information periodically from a registered product 101. At block 720, the analytics server 105 stores and analyzes the usage data and/or the information. At block 730, the analytics server 105 generates and sends to the product application the user usage recommendations, maintenance alerts, and product offers based on the analysis. As an alternative embodiment, at block 740, the analytics server generates and sends to the manufacturer server 103 usage recommendations, maintenance alerts, and products offers and the like based on the analysis. In this alternative embodiment, the manufacturer server 103 forwards the usage recommendations, maintenance alerts, and products offers to the product application of the user. The manufacturer server 103 may perform an adaptation or revision of the recommendations, maintenance alerts, and/or product offers before forwarding them to the product application on the computing or mobile device.

Figure 8 is a flow diagram of an exemplary method for linking an application on a computing or mobile device 114 or 115, after association with a product 101, with Facebook^{®} or other social media site. At block 810, after product registration is completed, the manufacturer server 103 may prompt the user through the application interface to link the application to Facebook^{®} (or some other social media service available through the network 110). At block 820, the application is linked to Facebook^{®} through Facebook connect (or some other social media connection) and gathers information for the manufacturer server 103 from the user profile data as associated with the product 101. This data may help the manufacturer assess the types of people that typically purchase the product, related products, and may be interested in other associated products or services.

At block 830, the user may enable (or allow) notifications, updates and links to be sent to the user through Facebook^{®}. At block 840, the manufacturer server 103 and/or analytics server 105 may send, through Facebook^{®}, group discounts to groups of users who share a common need or desire that is affiliated with the product or a related product or service. As one example, all Facebook users who have connected by virtue of their ownership of the same or similar furnace may receive a discount on air filters if the group as a whole purchases a certain volume of their air filters for the furnaces from the manufacturer.

According to additional aspects of the disclosure, a mobile device for registration of a product includes a transmitter; a receiver; a storage; a scanner; and a processor coupled with the transmitter, the receiver, the storage, and the scanner. The processor may be configured to: access a product application for registration of a product; direct the scanner through the product application to detect a product identification (ID) sequence on a registration card associated with the product; direct the transmitter to send the product ID sequence to a server over a network to register the product; and receive a communication through the receiver with reference to the product from the product or from the server over the network.

According to a second aspect of the mobile device, where the product ID sequence includes a serial or other identification number.

According to a third aspect of the mobile device, where the processor is further configured to receive, through the receiver, a connection from the product over the network.

According to a fourth aspect of the mobile device, where the processor is further configured to: receive an input from the user through a control interface of the product application; generate a command based on the input, the command to control at least one feature of the product; and send the command over the network to the product via the server, to execute control of the at least one feature.

According to a fifth aspect of the mobile device, where the processor further configured to receive, through the receiver, a wireless connection directly from the product.

According to a sixth aspect of the mobile device, further including a wireless connector coupled with the receiver that is configured to provide the wireless connection, the processor further configured to: receive an input from the user through a control interface of the product application; generate a command based on the input, the command to control at least one feature of the product; and send the command over the wireless connection directly to the product to execute control of the at least one feature.

According to a seventh aspect of the mobile device, where the communication includes a product update, a recall notice, or an offer received from the server related to the product, or combinations thereof, the processor further configured to provide an indicia in conjunction with the product application to notify the user of receipt of the communication.

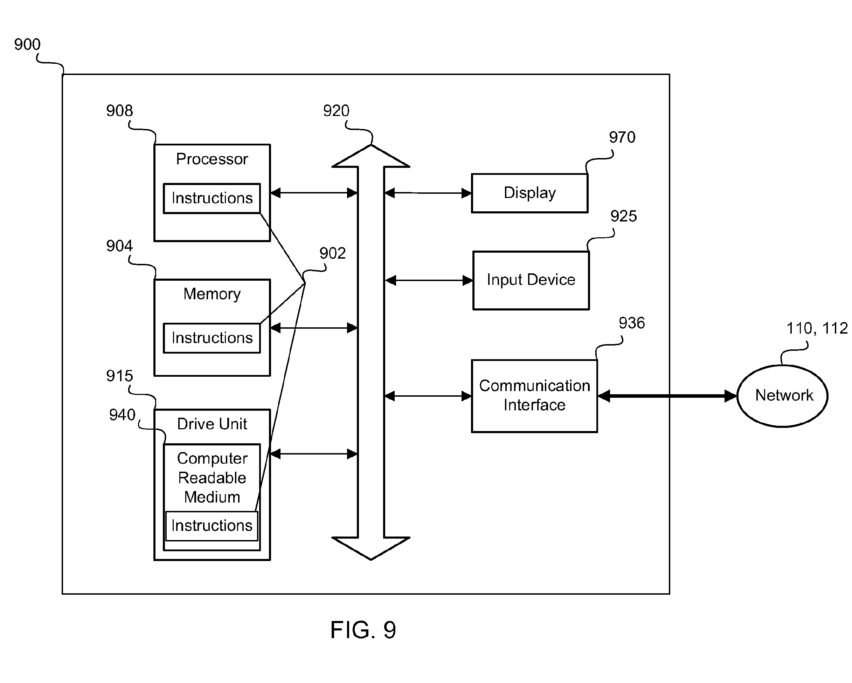

Figure 9 illustrates a general computer system 900, programmable to be a specific computer system 500, which may represent the manufacturer server 103, the analytics server 105, the mobile devices 115, or any other computing devices referenced herein or that may be executed by the system 100. The computer system 900 may include an ordered listing of a set of instructions 902 that may be executed to cause the computer system 900 to perform any one or more of the methods or computer-based functions disclosed herein. The computer system 900 may operate as a stand-alone device or may be connected, e.g., using the network 110 and 112, to other computer systems or peripheral devices.

In a networked deployment, the computer system 900 may operate in the capacity of a server or as a client-user computer in a server-client user network environment, or as a peer computer system in a peer-to-peer (or distributed) network environment. The computer system 900 may also be implemented as or incorporated into various devices, such as a personal computer or a mobile computing device capable of executing a set of instructions 902 that specify actions to be taken by that machine, including and not limited to, accessing the Internet or Web through any form of browser. Further, each of the systems described may include any collection of subsystems that individually or jointly execute a set, or multiple sets, of instructions to perform one or more computer functions.

The computer system 900 may include a memory 904 on a bus 920 for communicating information. Code operable to cause the computer system to perform any of the acts or operations described herein may be stored in the memory 904. The memory 904 may be a random-access memory, read-only memory, programmable memory, hard disk drive or any other type of volatile or non-volatile memory or storage device.

The computer system 900 may include a processor 908, such as a central processing unit (CPU) and/or a graphics processing unit (GPU). The processor 908 may include one or more general processors, digital signal processors, application specific integrated circuits, field programmable gate arrays, digital circuits, optical circuits, analog circuits, combinations thereof, or other now known or later-developed devices for analyzing and processing data. The processor 908 may implement the set of instructions 902 or other software program, such as manually-programmed or computer-generated code for implementing logical functions. The logical function or any system element described may, among other functions, process and/or convert an analog data source such as an analog electrical, audio, or video signal, or a combination thereof, to a digital data source for audio-visual purposes or other digital processing purposes such as for compatibility for computer processing.

The computer system 900 may also include a disk or optical drive unit 915. The disk drive unit 915 may include a computer-readable medium 940 in which one or more sets of instructions 902, e.g., software, can be embedded. Further, the instructions 902 may perform one or more of the operations as described herein. The instructions 902 may reside completely, or at least partially, within the memory 904 and/or within the processor 908 during execution by the computer system 900. Accordingly, the databases 145 and 163 described above in Figure 2 may be stored in the memory 904 and/or the disk unit 915.

The memory 904 and the processor 908 also may include computer-readable media as discussed above. A "computer-readable medium," "computer-readable storage medium," "machine readable medium," "propagated-signal medium," and/or "signal-bearing medium" may include any device that includes, stores, communicates, propagates, or transports software for use by or in connection with an instruction executable system, apparatus, or device. The machine-readable medium may selectively be, but not limited to, an electronic, magnetic, optical, electromagnetic, infrared, or semiconductor system, apparatus, device, or propagation medium.

Additionally, the computer system 900 may include an input device 925, such as a keyboard or mouse, configured for a user to interact with any of the components of system 900. It may further include a display 970, such as a liquid crystal display (LCD), a cathode ray tube (CRT), or any other display suitable for conveying information. The display 970 may act as an interface for the user to see the functioning of the processor 908, or specifically as an interface with the software stored in the memory 904 or the drive unit 915.

The computer system 900 may include a communication interface 936 that enables communications via the communications networks 110 and 112. The networks 110 and 112 may include wired networks, wireless networks, or combinations thereof. The communication interface 936 network may enable communications via any number of communication standards, such as 802.11, 802.17, 802.20, WiMax, 802.15.4, cellular telephone standards, or other communication standards. Just because one of these standards is listed does not mean any one is preferred as any number of these standards may never actually be adopted in a commercial product.

Accordingly, the method and system may be realized in hardware, software, or a combination of hardware and software. The method and system may be realized in a centralized fashion in at least one computer system or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein. Such a programmed computer may be considered a special-purpose computer.

The method and system may also be embedded in a computer program product, which includes all the features enabling the implementation of the operations described herein and which, when loaded in a computer system, is able to carry out these operations. Computer program in the present context means any expression, in any language, code or notation, of a set of instructions intended to cause a system having an information processing capability to perform a particular function, either directly or after either or both of the following: a) conversion to another language, code or notation; b) reproduction in a different material form.

As discussed above, the system may serve interfaces that convey additional information related to an advertisement or offer, recommendation, or notice and the like. For example, the system generates browser code operable by a browser to cause the browser to display a web page of information that includes an offer, recommendation, or notice, which may include a graphical indicator that indicates that the offer, recommendation, or notice is associated with an interface that conveys additional information associated with the advertisement or offer, recommendation, or notice. The browser code is operable to cause the browser to detect a selection of the graphical indicator, and display the interface along with the information displayed on the web page in response to the selection of the graphical indicator. The offer, recommendation, or notice and the additional information conveyed via the interface are submitted by an advertiser during a submission time of the offer, recommendation, or notice.

The above-disclosed subject matter is to be considered illustrative, and not restrictive, and the appended claims are intended to cover all such modifications, enhancements, and other embodiments, which fall within the true spirit and scope of the present disclosure. Thus, to the maximum extent allowed by law, the scope of the present embodiments are to be determined by the broadest permissible interpretation of the following claims and their equivalents, and shall not be restricted or limited by the foregoing detailed description. While various embodiments have been described, it will be apparent to those of ordinary skill in the art that many more embodiments and implementations are possible within the scope of the above detailed description. Accordingly, the embodiments are not to be restricted except in light of the attached claims and their equivalents.

## Claims

1. A server for registration of products comprising:
a product registrar; a processor; and computer storage; the product registrar executable by the processor to:
receive, via a network, a communication from a product application executed on a computing device for registration of a product, the communication comprising a product identification (ID) associated with a product and an indication of registration of the product by a user of the product application;
register the product at least by storing, in the computer storage, the product ID and a relationship between the product ID and an identification of the user of the product application; and
send a subsequent communication to the product application on the computing device based on the registration of the product.

2. The server of claim 1, where the processor is further configured to:
receive a username and password from the user; and
authenticate the user based on the username and password, the identification of the user based on one or both of the username and password.

3. The server of any of claims 1-2, where the product ID comprises a unique identifier of the product and where the processor is further configured to:
receive the unique identifier of the product from the product application;
receive the same unique identifier of the product transmitted from a specific product; and
using the unique identifier, determine the user on the product application associated with the specific product to allow communication transmissions between the specific product and the product application executed on the computing device.

4. The server of any of claims 1-3, where the product ID comprises a unique identifier of the product and where the processor is further configured to:
receive a command communication from the product application via the computing device, the command communication comprising the unique identifier and a command action indicative of an action for the registered product to perform; and
route the command communication to the registered product using the correlation of the user with the registered product.

5. The server of any of claims 1-4, where the product ID comprises an identifier of a type of the product, the processor further configured to:
identify, for the type of product, one or a combination of product updates, recall notices, and offers saved in the computer storage, where to send the subsequent communication comprises to send the identified one or a combination of the product updates, recall notices, and offers to the product application on the computing device.

6. The server of any of claims 1-5, where the processor is further configured to:
receive product usage data transmitted from the product or the product application; and
identify an offer or advertisement based on the product usage data as relates to use of the registered product by the user; and
where to send the subsequent communication comprises to send the offer or advertisement to the product application on the computing device.

7. The server of any of claims 1-6, the processor further configured to:
initiate a customer service link on the product application through which the user accesses a user manual, a product demonstration, a communication session with a customer service employee, or a combination thereof.

8. The server of any of claims 1-7, the processor further configured to:
request the user to connect to a social media interface through the product application;
receive an acceptance of the request through the product application;
stream to the computing device a connect program for installation on the computing device;
upon installation of the connect program, connect the product application to the social media interface; and
retrieve user profile data of the user from a social media database accessible through the social media interface.

9. The server of claim 8, the processor further configured to:
send a group offer to a group of users including the user who has registered the product or a related product.

10. A computer-readable storage medium comprising a set of instructions for automated registration of products executable by a server having a processor and computer storage, the computer-readable storage medium comprising:
instructions to direct the processor to receive, via a network, a communication from a product application executed on a computing device for registration of a product, the communication comprising a product identification (ID) associated with a product and an indication of registration of the product by a user of the product application;
instructions to direct the processor to register the product at least by storing, in the computer storage, the product ID and a relationship between the product ID and an identification of the user of the product application; and
instructions to direct the processor to send a subsequent communication to the product application on the computing device based on the registration of the product.

11. The computer-readable storage medium of claim 10, where the product ID comprises a unique identifier of the product, the storage medium further comprising instructions to direct the processor to:
receive the unique identifier of the product transmitted from the product application on the computing device;
receive the same unique identifier of the product transmitted from a specific product; and
using the unique identifier, determine the user on the product application associated with the specific product to allow communication transmissions between the specific product and the product application executed on the computing device.

12. The computer-readable storage medium of any of claims 10-11, where the product ID comprises a unique identifier of the product, the storage medium further comprising instructions to direct the processor to:
receive a command communication from the product application via the computing device, the command communication comprising the unique identifier and a command action indicative of an action for the registered product to perform; and
route the command communication to the registered product using the user associated with the specific product.

13. The computer-readable storage medium of any of claims 10-12, where the product ID comprises an identifier of a type of the product, the computer-readable storage medium further comprising instructions to direct the processor to:
identify, for the type of product, a product update, a recall notice, an offer, or a combination thereof saved in the computer storage, where to send the subsequent communication comprises to send the identified product update, recall notice, offer or combinations thereof to the product application via the computing device.

14. The computer-readable storage medium of any of claims 10-13, where the computer-readable storage medium further comprises instructions to direct the processor to:
receive product usage data transmitted from the product or the product application; and
identify an offer or advertisement based on the product usage data as relates to use by the user of the registered product; and
where to send the subsequent communication comprises to send the offer or advertisement to the product application on the computing device.

15. A method for registering a product comprising:
receiving, by a registration server having a processor and computer storage, a product identification (ID) transmitted by the product to the server, the product ID including a type of the product;
installing, by a user of the product, a product application on a mobile device, wherein the product application communicates with the server and transmits to the server a unique identifier of the user;
registering the product at least by storing, in the computer storage of the server, the product ID and a relationship between the product ID and the unique identifier of the user;
connecting, with the server, the mobile device to the registered product such that the mobile device can communicate with and control the product, the connection based on the registration of the product;
identifying, using the processor and for the type of product, a product update, a recall notice, an offer or a combination thereof saved in the computer storage; and
transmitting, using the server, a communication transmission to the mobile device or the product with information or a command related to the identified product update, recall notice, offer or combination thereof.
